# EUROPÄISCHE PATENTSCHRIFT

(11) **EP 0 929 981 B1**
(45) Veröffentlichungstag und Bekanntmachung des Hinweises auf die Patenterteilung: **19.12.2001**
(21) Anmeldenummer: 97912035.9
(22) Anmeldetag: 29.09.1997
(51) Int. Cl.: H04Q 7/22

(54) **VERFAHREN ZUM ANZEIGEN, DASS IN EINEM NACHRICHTENZENTRALMODUL EINES MOBILFUNKNETZES EINE TEXTNACHRICHT VORLIEGT**
METHOD FOR INDICATING THAT A TEXT MESSAGE IS AVAILABLE IN A CENTRAL MESSAGING MODULE OF A MOBILE RADIOTELEPHONE NETWORK
PROCEDE POUR INDIQUER PAR AFFICHAGE LA PRESENCE D'UN MESSAGE TEXTUEL DANS UN MODULE CENTRAL DE COMMUNICATION D'UN RESEAU RADIOTELEPHONIQUE MOBILE

(30) Priorität: 30.09.1996 DE 19640219
(43) Veröffentlichungstag der Anmeldung: 21.07.1999
(73) Patentinhaber: SIEMENS AKTIENGESELLSCHAFT, 80333 München (DE)
(72) Erfinder: KARAPETKOV, Stefan, D-81369 München (DE); SCOTTO DI CARLO, Vincenzo, D-81739 München (DE); MÜLLER, Wilhelm, D-85457 Wörth (DE)
(86) Internationale Anmeldenummer: DE9702231
(87) Internationale Veröffentlichungsnummer: WO9815142

(56) Entgegenhaltungen:
- WO-A-96/26616
- US-A- 5 313 515
- COURAU F ET AL: "IMPLEMENTATION OF BROADCAST AND PERSONAL MESSAGE SERVICES IN AN EXPERIMENTAL MOBILE RADIO SYSTEM" 30. Juni 1987 , INTERNATIONAL CONFERENCE ON DIGITAL LAND MOBILE RADIO COMMUNICATIONS, PAGE(S) 144 - 151 XP002019072 siehe Seite 146, Zeile 27 - Seite 147, Zeile 11
- LANTTO J: "ROAMING BETWEEN CELLULAR STANDARDS" 23. April 1995 , ISS '95. WORLD TELECOMMUNICATIONS CONGRESS. (INTERNATIONAL SWITCHIN SYMPOSIUM), ADVANCED SWITCHING TECHNOLOGIES FOR UNIVERSAL TELECOMMUNICATIONS AT THE BEGINNING OF THE 21ST. CENTURY BERLIN, APR. 23 - 28, 1995, VOL. VOL. 1, NR. SYMP. 15, PAGE(S) 241 , VERBAND DEUTSCHER ELEKTROTECHNIKER (VDE) ET AL XP000495572 siehe das ganze Dokument

## Beschreibung

Die vorliegende Erfindung betrifft ein Verfahren zum Anzeigen, daß in einem zum Entgegennehmen und Zustellen von Textnachrichten vorgesehenen Nachrichtenzentralmodul eines Mobilfunknetzes eine Textnachricht zum Zustellen an einen Teilnehmer vorliegt, der sowohl im Mobilfunknetz als auch in einem anderen Kommunikationsnetz als Teilnehmer angemeldet ist, nach dem Oberbegriff des Anspruches 1.

Solche Textnachrichten werden beispielsweise innerhalb von landgestützten Mobilfunknetzen gemäß dem Standard GSM (Globales System für Mobilfunk) einem GSM-Mobilfunkendgerät zugestellt. Die Textnachrichten werden auch mit dem englischsprachigen Begriff für Kurznachrichten mit Short Message bezeichnet und der entsprechende Kommunikationsdienst wird mit SMS oder Short Message Service bezeichnet. Die Handhabung eines GSM-Mobilfunkendgerätes beim Entgegennehmen, Lesen, Bearbeiten oder Löschen von Textnachrichten ist u.a. aus der Gebrauchsanleitung zum GSM-Mobilfunkendgerät S3 der Siemens AG, 1995, Seiten 24 bis 27 bekannt.

Wird bei bekannten Mobilfunknetzen in einem zum Entgegennehmen und Zustellen von Textnachrichten vorgesehenen Nachrichtenzentralmodul eine Textnachricht (Short Message) empfangen, die an einen bestimmten Teilnehmer zugestellt werden soll, so veranlaßt das Nachrichtenzentralmodul eine Signalisierung an das Mobilfunkendgerät des Teilnehmers, die dieses Endgerät veranlaßt, das Vorliegen einer Nachricht anzuzeigen. In der zuvor genannten Bedienungsanleitung wird hierzu angegeben, daß bei Vorliegen einer Nachricht in der Anzeige des Mobilfunkendgerätes ein Informationssymbol "i" blinkt, um das Vorliegen einer Nachricht anzuzeigen.

Der Teilnehmer kann die vorliegende Nachricht dann bedarfsweise abrufen, woraufhin das Nachrichtenzentralmodul ein Übermitteln der Textinformation zu dem Mobilfunkendgerät des Teilnehmers veranlaßt. Diese Textinformation wird in einem Speicher auf der SIM-Karte des Teilnehmers gespeichert und kann auf der Anzeige des Endgerätes angezeigt werden.

Sowohl die Information über das Vorliegen einer Textnachricht als auch die Textnachricht selbst können nur dann vom Nachrichtenzentralmodul zum Teilnehmer übermittelt werden, wenn das Mobilfunkendgerät des Teilnehmers sich innerhalb des Funkbereiches des Mobilfunknetzes befindet, betriebsbereit geschaltet ist und die Energieversorgung des Endgerätes sichergestellt ist. Das Endgerät ist nämlich nur unter diesen Bedingungen innerhalb des Mobilfunknetzes erreichbar und wird im Rahmen einer sogenannten Roaming-Prozedur als innerhalb des Mobilfunknetzes erreichbar erkannt. Die aktuelle Erreichbarkeit eines Teilnehmers innerhalb eines Mobilfunknetzes wird hierbei in einer dem Teilnehmer zugeordneten Datenbasis des Mobilfunknetzes gespeichert.

Wenn ein Teilnehmer, dem eine im Nachrichtenzentralmodul vorliegende Textnachricht zugestellt werden soll, innerhalb des Mobilfunknetzes nicht erreichbar ist, wird die Textnachricht bzw. der Hinweis auf Vorliegen einer Textnachricht üblicherweise an das Mobilfunkendgerät des Teilnehmers übermittelt, sobald dieses Mobilfunkendgerät innerhalb des Mobilfunknetzes wieder erreichbar ist.

Aufgabe der Erfindung ist es, ein Verfahren zum Anzeigen des Vorliegens einer zuzustellenden Textnachricht in einem Nachrichtenzentralmodul eines Mobilfunknetzes anzugeben, bei dem ein Teilnehmer vom Vorliegen einer für ihn bestimmten Textnachricht auch erfährt, wenn er nicht aktuell im Mobilfunknetz erreichbar ist.

Diese Aufgabe löst die Erfindung durch ein Verfahren mit den Merkmalen des Anspruches 1.

Günstige Weiterbildungen der Erfindung sind Gegenstand von Unteransprüchen.

Liegt in einem zum Entgegennehmen und Zustellen von Textnachrichten vorgesehenen Nachrichtenzentralmodul eines Mobilfunknetzes eine Textnachricht vor, die an einen Teilnehmer zugestellt werden soll, der sowohl in dem Mobilfunknetz des Nachrichtenzentralmoduls als auch in einem anderen Kommunikationsnetz als Teilnehmer angemeldet ist, dann leitet das Nachrichtenzentralmodul Schritte ein, um dem Teilnehmer eine Mitteilung über das Vorliegen dieser Nachricht zuzustellen. In bekannter Weise wird im Mobilfunknetz geprüft, ob der Teilnehmer innerhalb dieses Mobilfunknetzes erreichbar ist. Hierzu wird eine dem Teilnehmer zugeordnete Datenbasis des Mobilfunknetzes abgefragt, in der der Aufenthaltsort des Teilnehmers gespeichert ist, falls er aktuell innerhalb des Mobilfunknetzes erreichbar ist.

Erfindungsgemäß ist in der Datenbasis des Mobilfunknetzes auch die Erreichbarkeit des Teilnehmers in dem anderen Kommunikationsnetz gespeichert und das Nachrichtenzentralmodul übermittelt eine Meldung über das Vorliegen einer Textnachricht für den Teilnehmer an ein Steuermodul des anderen Kommunikationsnetzes. Abhängig davon veranlaßt dieses Steuermodul das Anzeigen einer Information über das Vorliegen einer Textnachricht an einem den Teilnehmer innerhalb des anderen Kommunikationsnetzes zugeordneten Endgerät.

Dadurch wird sichergestellt, daß ein Teilnehmer einen Hinweis über das Vorliegen einer Textnachricht immer erhält, wenn er in irgendeinem Kommunikationsnetz erreichbar ist, in dem er als Teilnehmer angemeldet ist.

Um den Umfang der zwischen den unterschiedlichen Kommunikationsnetzen auszutauschenden Signalisierungsinformation zu beschränken, sieht eine Weiterbildung eines erfindungsgemäßen Verfahrens vor, eine Meldung über das Vorliegen einer Textnachricht für den Teilnehmer von dem Nachrichtenzentralmodul des Mobilfunknetzes zum Steuermodul des anderen Kommunikationsnetzes nur dann zu übermitteln, wenn der Teilnehmer nicht innerhalb des Mobilfunknetzes erreichbar ist.

Wenn in einer weiteren Ausgestaltungsform der Erfindung in der dem Teilnehmer zugeordneten Datenbasis des Mobilfunknetzes nur die prinzipielle und nicht die aktuelle Erreichbarkeit des Teilnehmers in dem anderen Kommunikationsnetz gespeichert ist, wird eine Meldung über das Vorliegen einer Textnachricht für den Teilnehmer unabhängig davon, ob er tatsächlich an dem Endgerät des anderen Kommunikationsnetzes erreichbar ist zu dem Steuermodul des anderen Kommunikationsnetzes übermittelt. Nachteilig an dieser Ausgestaltungsform ist, daß auch unnötige Meldungen zwischen den Kommunikationsnetzen übertragen werden. Ein Vorteil dieser Ausgestaltungsform der Erfindung ist, daß der Teilnehmer, sobald er in dem anderen Kommunikationsnetz erreichbar ist, einen Hinweis über das Vorliegen einer Textnachricht erhält, auch wenn er zum Zeitpunkt des Übermittelns der Meldung über das Vorliegen einer Textnachricht an das Steuermodul nicht erreichbar war.

Die Menge der zwischen dem Nachrichtenzentralmodul des Mobilfunknetzes und dem Steuermodul des anderen Kommunikationsnetzes zu übermittelnden Meldungen kann dadurch reduziert werden, daß in einer weiteren Ausgestaltungsform des erfindungsgemäßen Verfahrens das Nachrichtenzentralmodul eine Meldung nur dann übermittelt, wenn die Erreichbarkeit des Teilnehmers in dem anderen Kommunikationsnetz vom Nachrichtenzentralmodul erkannt worden ist.

Eine besonders günstige Ausgestaltungsform des erfindungsgemäßen Verfahrens bezogen auf die Reduzierung unnötiger Meldungsaustausche zwischen Mobilfunknetz und anderem Kommunikationsnetz sieht vor, daß die aktuelle Erreichbarkeit des Teilnehmers in dem anderen Kommunikationsnetz in der dem Teilnehmer zugeordneten Datenbasis des Mobilfunknetzes gespeichert ist. Dies kann beispielsweise dadurch geschehen, daß das andere Kommunikationsnetz dem Mobilfunknetz die aktuelle Erreichbarkeit des Teilnehmers in dem anderen Kommunikationsnetz in Form einer Meldung übermittelt. Alternativ kann das Nachrichtenzentralmodul des Mobilfunknetzes bei Vorliegen einer dem Teilnehmer zuzustellenden Textnachricht ein Prüfen der aktuellen Erreichbarkeit des Teilnehmers in dem anderen Kommunikationsnetz veranlassen.

Das eigentliche Zustellen einer Textnachricht an den Teilnehmer erfolgt üblicherweise auf Anforderung des Teilnehmers hin. Hierbei kann das Nachrichtenzentralmodul die Textnachricht beispielsweise innerhalb des Mobilfunknetzes an das Mobilfunkendgerät des Teilnehmers zustellen, dessen Erreichbarkeit zuvor festgestellt worden ist. Es ist jedoch auch möglich, daß das Nachrichtenzentralmodul des Mobilfunknetzes die Textnachricht auf Anforderung des Teilnehmers über ein anderes Kommunikationsnetz, beispielsweise ein Datennetz, an ein Datenendgerät des Teilnehmers zustellt.

Das Absenden von Kurznachrichten an das Nachrichtenzentralmodul eines Mobilfunknetzes ist u.a. aus dem Artikel "Kurznachrichten mit dem PC versenden", Funkschau 17/1996, Seiten 50 bis 52 bekannt. Hier werden verschiedene Systeme angegeben, um beispielsweise über ein Modem und das öffentliche Telefonnetz oder über das Internet an irgendeinen Teilnehmer zuzustellende Kurznachrichten an ein Nachrichtenzentralmodul eines Mobilfunknetzes zu übertragen. Das Zustellen von Nachrichten an einen Teilnehmer ist in analoger Weise vom Nachrichtenzentralmodul über ein geeignetes Kommunikationsnetz an einen Computer möglich.

Eine günstige Ausgestaltungsform eines erfindungsgemäßen Verfahrens sieht vor, daß das Nachrichtenzentralmodul des Mobilfunknetzes nach dem Ausliefern einer Textnachricht eine Erledigungsmeldung an das Steuermodul des anderen Kommunikationsnetzes übermittelt, falls zuvor eine Meldung über das Vorliegen einer Textnachricht für den Teilnehmer an dieses Steuermodul übermittelt worden ist. Dadurch wird verhindert, daß das Voriegen bereits abgefragter Nachrichten angezeigt wird.

Für den Fall, daß der Teilnehmer, an den eine Kurznachricht zugestellt werden soll sowohl im Mobilfunknetz als auch im anderen Kommunikationsnetz mit Hilfe eines zwischen Schnurlosbetrieb und Mobilfunkbetrieb umschaltbaren Endgerätes erreichbar ist, sieht eine Weiterbildung des erfindungsgemäßen Verfahrens vor, daß das im Schnurlosbetrieb befindliche Endgerät nach Erhalt einer Information über das Vorliegen einer Textnachricht automatisch in den Mobilfunkmodus umgeschaltet wird.

Eine günstige Ausgestaltung eines solchen erfindungsgemäßen Verfahrens sieht vor, daß das Endgerät nur dann in den Mobilfunkmodus umgeschaltet wird, wenn es nicht im Sende-/Empfangsbetrieb ist und daß, falls das Endgerät bei Erhalt einer Information über das Vorliegen einer Textnachricht im Schnurlosbetriebsmodus im Sende-/Empfangsbetrieb ist, nach Beendigung dieses Sende-/Empfangsbetriebs in den Mobilfunkmodus umgeschaltet wird.

Das Anzeigen einer Information über das Vorliegen einer Textnachricht kann an dem dem anderen Kommunikationsnetz zugeordneten Endgerät beispielsweise visuell durch ein Anzeigesymbol einer Anzeigeeinheit, durch Anzeigen eines entsprechenden Textes, durch Aufleuchten einer Lampe und/oder durch eine entsprechende Ansage erfolgen. Das Steuermodul des anderen Kommunikationsnetzes veranlaßt hierbei das Übermitteln einer Steuerinformation, beispielsweise in Form einer Meldung, an das Endgerät. Die Art der Meldung ist hierbei abhängig von der Art des Kommunikationsnetzes und prinzipiell bekannt.

Das andere Kommunikationsnetz kann beispielsweise ein anderes Mobilfunknetz, ein stationäres Telefonnetz mit fest verdrahtetem Endgerät oder mit Schnurlosendgerät oder ein Datennetz mit Datenendgerät sein.

Nachstehend wird die Erfindung unter Bezugnahme auf die Figuren anhand eines Ausführungsbeispiels näher erläutert. Es zeigt:
- Fig. 1: in schematischer Darstellung ein Blockschaltbild einer Netzanordnung, bestehend aus einem Mobilfunknetz, einem öffentlichen stationären Netz und einem Privatnetz mit erfindungsgemäßem Steuermodul;
- Fig. 2: ein Kurznachrichtenprotokoll in der Anwendungsschicht sowie die Protokolle der darunterliegenden Schicht unter Angabe der Übergangsbereiche für die Übertragung einer Information zwischen einem Kurznachrichtendienstezentrum eines Mobilfunknetzes und einem Endgerät eines privaten Kommunikationsnetzes.
- Fig. 3: das Blockschaltbild einer speziellen Kommunikationsnetzanordnung zur Durchführung eines erfindungsgemäßen Verfahrens.

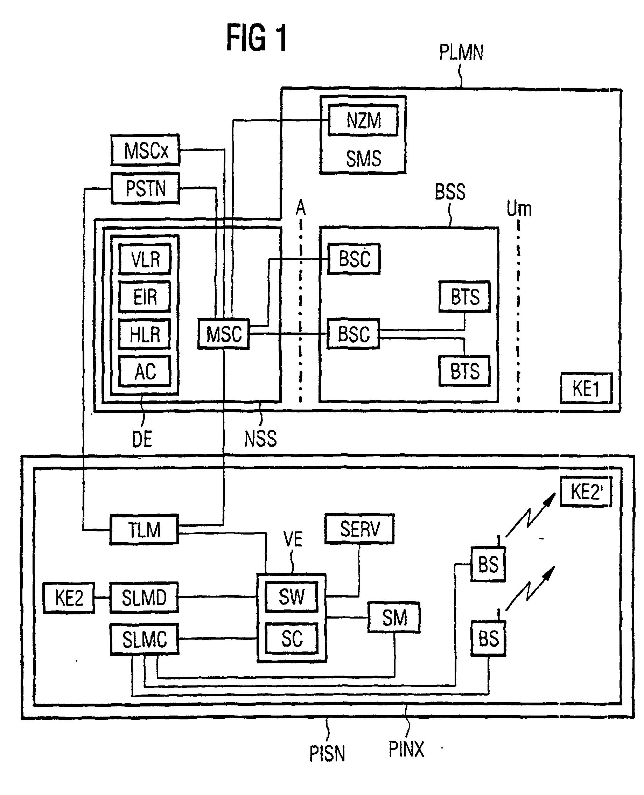

Fig. 1 zeigt in schematischer Darstellung ein Blockschaltbild eines Mobilfunknetzes PLMN mit einer Kurznachrichtendiensteeinheit SMS (Short Message Service,) einem Netzsubsystem NSS (Network Subsystem) zum Verbindungsaufbau zwischen mindestens einem Mobilteilnehmer mit anderen Teilnehmern und zum Mobilitätsmanagement, und mit einem Basisstationensubssystems zum Steuern der Funkverbindungen mit Mobilstationen. In Fig. 1 ist beispielhaft eine Mobilstation als Kommunikationsendgerät KE1 gezeigt.

Die Kurznachrichtendiensteeinheit SMS enthält ein Nachrichtenzentralmodul NZM zum Entgegennehmen und Zustellen von Textnachrichten an Teilnehmer des Mobilfunknetzes. Die Haupteinheit des Netzwerksubsystems NSS ist ein Mobildienstevermittlungszentrum MSC (Mobile Services Switching Center), das über eine A-Schnittstelle mit Basisstationssteuereinheiten BSC (Base Station Controller) kommuniziert. In dem einen in Fig. 1 dargestellten Basisstationsstationssubsystem BSS ist eine Basisstationsteuereinheit BSC gezeigt, die mehrere Basisstationen BTS bedarfsweise mit dem Mobildienstevermittlungszentrum MSC verbindet.

Das Mobildienstevermittlungszentrum MSC dient als üblicher Vermittlungsknoten und stellt darüber hinaus alle zum Behandeln von mobilen Teilnehmern benötigten Funktionalitäten wie Registrierung, Autentifikation, Aktualisierung des Aufenthaltsortes, Gesprächsübergabe zwischen Basisstationen und Rufsteuerung zu einem in einem Bereich einer Basisstation als anwesend angemeldeten Teilnehmer bereit. Das Mobildienstevermittlungszentrum MSC stellt auch Verbindungen zu den öffentlichen Netzen PSTN und im Beispiel nach Fig. 1 zu einem anderen Mobildienstevermittlungszentrum MSCx sowie zu einem privaten Netz PISN bereit. Ein Heimataufenthaltsortsregister HLR und ein Besucheraufenthaltsortsregister VLR dienen gemeinsam mit dem Mobildienstevermittlungszentrum MSC der Rufsteuerung und der Aufenthaltsortermittlung von Teilnehmerendgeräten im Mobilfunknetz.

Zwei weitere Register des Netzsubsystems NSS, nämlich ein Equipment-Identity-Register EIR und ein Authentifizierungsregister AC werden zur Authentifikation und zu Sicherheitszwecken benutzt. Das Equipment Identity Register EIR enthält eine Liste aller in dem Netz zugelassener Mobilgeräte, wobei jede Mobilstation durch ihre internationale Mobile-Equipment-Identitfikation IMEI (International Mobile Equipment Identity) identifiziert ist. Im Authentifizierungszenter AC sind Kopien aller geheimen, jeweils in der SIM-Karte jedes Teilnehmers gespeicherten Schlüssel abgelegt, die zur Authentifikation und zur Verschlüsselung über den Funkkanal verwendet werden.

Demnach liegt von jedem Teilnehmer innerhalb des Mobilfunknetzes PLM eine ihm zugeordnete Datenbasis vor, in der seine Berechtigungen, sein Aufenthaltsort und weitere Informationen abrufbar gespeichert sind.

Das Mobildienstevermittlungszentrum MSC kommuniziert mit den Registern HLR, VLR, AC und EIR unter Verwendung eines MAP genannten Protokolls (Mobile Application Part Protocol). Dieses genormte Protokoll MAP enthält Signalisierungsfunktionen, die zum Bereitstellen von in einem Mobilnetz benötigten Diensten erforderlich sind.

Fig. 1 zeigt außerdem ein Privatnetz PISN mit einer Vermittlungseinrichtung VE zum Auf- und Abbau von Verbindungen zwischen Teilnehmern. Die Vermittlungseinrichtung VE enthält einen Vermittlungsknoten SW und eine Vermittlungssteuerung SC. Die Vermittlungseinrichtung VE ist über ein Netzleitungsanschlußmodul PLM mit einem öffentlichen Kommunikationsnetz PSTN und mit dem Mobildienstevermittlungszentrum MSC des Mobilfunknetzes PLMN verbindbar. Die Vermittlungseinrichtung VE kann über Teilnehmeranschlußmodule SLMD und SLMC Verbindungen zu Kommunikationsendgeräten KE2, KE2' aufbauen. Das in Fig. 1 beispielhaft dargestellte Teilnehmeranschlußmodul für digitale Endgerät SLMD ist über eine Leitung mit einem Kommunikationsendgerät KE2 verbindbar. Das in Fig. 1 dargestellte Schnurlos-Teilnehmeranschlußmodul SLMC ist über eine Basisstation BS und eine Funktstrecke mit einem Kommunikationsendgerät KE2' verbindbar. In dem in Fig. 1 dargestellten Ausführungsbeispiel kann außerdem eine Verbindung von der Vermittlungseinrichtung VE über das Schnurlos-Teilnehmeranschlußmodul SLMC zu einem Steuermodul SM für Kurznachrichten aufgebaut werden. Hierzu muß dem Steuermodul SM eine Dienstenummer zugeordnet sein, zu der ein Verbindungsaufbau beispielsweise von der Kurznachrichtendiensteeinheit SMS des Mobilfunknetzes PLMN über das Mobildienstevermittlungszentrum MSC und das Netzleitungsanschlußmodul TLM aufgebaut werden kann. Das Steuermodul SM ist, beispielsweise über eine nicht im einzelnen dargestellte Applikationsschnittstelle oder ein Computer-Telefon-Interface (CTI) mit der Vermittlungseinrichtung gekoppelt, um über die Vermittlungseinrichtung VE Information an ein Endgerät KE2, KE2' zu übermitteln.

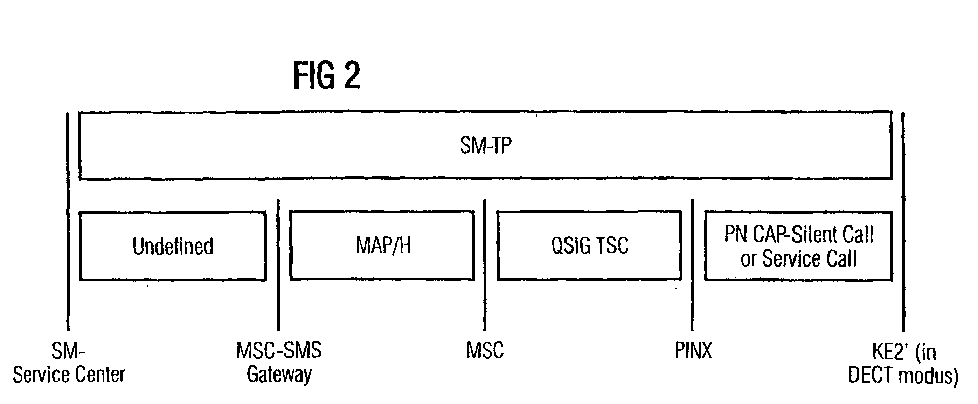

Nachstehend wird ein erfindungsgemäßes Verfahren unter Bezugnahme auf die in Fig. 1 gezeigten Kommunikationsnetze unter Berücksichtigung der Fig. 2 beschrieben.

Wenn im Nachrichtenzentralmodul NZM der Kurznachrichtendiensteinheit SMS des Mobilfunknetzes PLMN eine Kurznachricht vorliegt, die für einen Teilnehmer bestimmt ist, für den im Mobilfunknetz PLMN die Mobilstation KE1 angemeldet ist und außerdem in dem Privatnetz PISN der Teilnehmeranschluß mit dem Endgerät KE2 angemeldet ist, wird innerhalb des Mobilfunknetzes PLMN durch Abfragen der Dateneinheit DE unter Einbeziehung des Heimataufenthaltsregisters HLR und des Besucheraufenthaltsregisters VLR überprüft, wo der Teilnehmer erreichbar ist. Hierzu wird eine Information über das Vorliegen einer Textnachricht von der Kurznachrichtendiensteeinheit in einem nicht standardisierten Protokoll an ein Gateway übergeben, das zwischen der Kurznachrichtendiensteeinheit und dem Mobildienstevermittlungszentrum MSC angeordnet ist, um die genannte Meldung in das Formateines MAP/H-Protokolls umzusetzen. Ein MAP-Protokoll enthält Signalisierungsfunktionen, die zum Bereitstellen von in einem Mobilfunknetz benötigten Diensten erforderlich sind und ist unter dem Namen "Mobile Application Part Protocol" standardisiert. Die im Format MAP-H vorliegende Meldung führt dazu, daß im Mobilfunknetz PLMN überprüft wird, wo der Teilnehmer erreichbar ist. Wenn der Teilnehmer nicht im Mobilfunknetz PLMN erreichbar ist, jedoch in der dem Teilnehmer zugeordneten Datenbasis des Mobilfunknetzes PLMN die Erreichbarkeit des Teilnehmers in dem Privatnetz PISN gespeichert ist, wird eine Meldung über das Vorliegen einer Kurznachricht vom Mobildienstevenmittlungszentrum MSC im Format eines gemäß QSIG standardisierten Protokolls, im Beispiel gemäß Fig. 2 im Format QSIG TSC, an eine Nebenstellenanlage PINX des Privatnetzes PISN übermittelt. QSIG ist ein globales Signalisierungssystem für Firmennetze auf der Basis von DSS1. Einzelheiten zu QSIG sind dem sogenannten QSIG-Handbook entnehmbar, das unter der Adresse http://www.QSIG.IE/QSIG-Handbook/ im Internet verfügbar ist.

In Fig. 1 ist ein Privatnetz PISN in Form einer einzigen Nebenstellenanlage PINX dargestellt. Selbstverständlich besteht jedoch ein Privatnetz PISN üblicherweise aus einer Vielzahl miteinander verbundener Nebenstellenanlagen PINX.

Innerhalb der Nebenstellenanlage PINX wird die Meldung über das Vorliegen einer Kurznachricht unter Verwendung von für die Nebenstellenanlage spezifischen Protokollen, im Beispiel nach Fig. 2 PN CAP genannt, bis zu dem dem Teilnehmer zugeordneten Endgerät KE2 übermittelt. Dies erfolgt im Ausführungsbeispiel gemäß Fig. 1 über das Steuermodul SM, das die Vermittlungseinrichtung VE veranlaßt, eine Anzeigeeinrichtung am Endgerät KE2 anzusteuern, um das Vorliegen einer Textnachricht im Mobilfunknetz PLMN zu signalisieren.

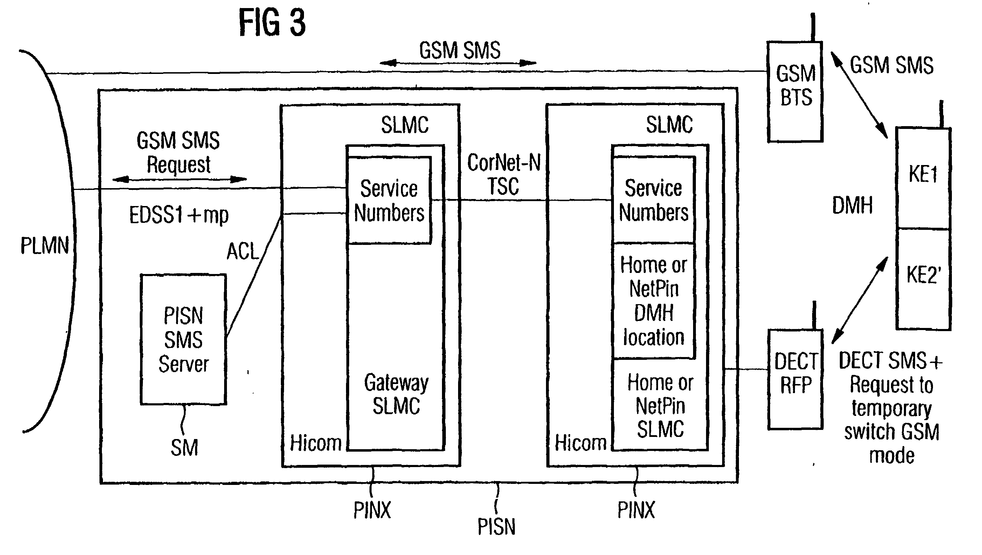

Fig. 3 zeigt das Blockschaltbild einer Kommunikationsnetzanordnung, bestehend aus einem Mobilfunknetz PLMN und einem Privatnetz PISN, wobei ein einem Teilnehmer zugeordnetes Endgerät KE1 des Mobilfunknetzes PLMN und ein demselben Teilnehmer zugeordnetes Endgerät KE2 des Privatnetzes PISN durch einen einzigen Dualmode-Handapparat DMH realisiert sind, der über eine Schnurlosluftschnittstelle mit einer Basisstation BS des Privatnetzes PISN als auch über eine Mobilfunkluftschnittstelle mit einer Basisstation BTS des Mobilfunknetzes PLMN verbindbar ist.

Im in Fig. 3 illustrierten Ausführungsbeispiel sendet das Mobilfunknetz PLMN unter Verwendung einer Dienstenummer eine Meldung über das Vorliegen einer Kurznachricht für den Teilnehmer des Endgerätes KE2 unter Verwendunge eines QSIG-Protokolls an ein als Gateway vorgesehenes Teilnehmeranschlußmodul SLMC unter Verwendung einer Dienstenummer. Dieses Teilnehmeranschlußmodul SLMC ist über eine Anwendungsschnittstelle ACL mit einem Steuermodul SM eines Kurznachrichtenservers für das Privatnetz verbindbar und das Steuermodul SM veranlaßt das Umsetzen der Information über das Vorliegen einer Kurznachricht in eine Steuerinformation für das Privatnetz PISN. Die Information über das Vorliegen einer Kurznachricht wird unter Verwendung eines nebenstellenanlageninternen Protokolls Cor-Net zu dem Teilnehmeranschlußmodul SLMC übertragen, in deren Bereich der Dualmodus-Handapparat DMH und somit das Endgerät KE2 als anwesend gemeldet ist. Das Teilnehmeranschlußmodul SLMC veranlaßt die Wegelenkung der Steuerinformation für das Endgerät über die Basisstation BS, in deren Bereich das Endgerät KE2 als anwesend gemeldet ist. Im beschriebenen Beispiel wird zusätzlich zur Information über das Vorliegen einer Textnachricht eine Anfrage auf zeitweiliges Umschalten des Dualmodus-Handapparates in den Mobilfunkmodus übermittelt.

Wenn der Dualmodus-Handapparat DMH in den Mobilfunkmodus umgeschaltet wird, wenn also das Endgerät KE1 aktiviert wird, so kann abhängig von der Empfangslage des Dualmodus-Handapparates DMH die Textnachricht im Mobilfunkmodus abgefragt werden.

## Patentansprüche

1. Verfahren zum Zustellen einer Textnachricht, die in einem zum Entgegennehmen und Zustellen von Textnachrichten vorgesehenen Nachrichtenzentralmodul (NZM) eines öffentlichen Mobilfunknetzes (PLMN) zum Zustellen an einen Teilnehmer empfangen worden ist, der sowohl in dem Mobilfunknetz (PLMN), als auch in einem anderen Kommunikationsnetz (PISN) als Teilnehmer angemeldet ist, und dessen Aufenthaltsort in einer ihm zugeordneten Datenbasis gespeichert ist, falls er innerhalb des Mobilfunknetzes (PLMN) erreichbar ist, wobei bei Vorliegen einer dem Teilnehmer zuzustellenden Textnachricht im Mobilfunknetz (PLMN) geprüft wird, ob der Teilnehmer innerhalb des Mobilfunknetzes (PLMN) erreichbar ist, **dadurch gekennzeichnet, daß** die Erreichbarkeit des Teilnehmers in dem anderen Kommunikationsnetz (PISN) in der dem Teilnehmer zugeordneten Datenbasis des Mobilfunknetzes (PLMN) gespeichert ist, daß das Nachrichtenzentralmodul (NZM) eine Meldung über das Vorliegen einer Textnachricht für den Teilnehmer an ein Steuermodul (SM) des anderen Kommunikationsnetzes (PISN) übermittelt und daß dieses Steuermodul (SM) daraufhin das Anzeigen einer Information über das Vorliegen einer Textnachricht in dem Nachrichtenzentralmodul (NZM) des Mobilfunknetzes (PLMN) an einem dem Teilnehmer innerhalb des anderen Kommunikationsnetzes (PISN) zugeordneten Endgerät (KE2) veranlaßt.

2. Verfahren nach Anspruch 1, **gekennzeichnet durch** das Übermitteln einer Meldung über das Vorliegen einer Textnachricht für den Teilnehmer an ein Steuermodul (SM) des anderen Kommunikationsnetzes (PISN) **durch** das Nachrichtenzentralmodul (NZM), falls der Teilnehmer nicht innerhalb des Mobilfunkneczes (PLMN) erreichbar ist.

3. Verfahren nach Anspruch 1 oder 2, **dadurch gekennzeichnet, daß** die Erreichbarkeit des Teilnehmers in dem anderen Kommunikationsnetz (PISN) überprüft wird und daß das Nachrichtenzentralmodul (NZM) eine Meldung über das Vorliegen einer Textnachricht für den Teilnehmer an ein Steuermodul (SM) des anderen Kommunikationsnetzes (PISN) übermittelt, wenn die Erreichbarkeit des Teilnehmers in dem anderen Kommunikationsnetz (PISN) von dem Nachrichtenzentralmodul (NZM) erkannt ist.

4. Verfahren nach einem der vorhergehenden Ansprüche, **dadurch gekennzeichnet, daß** nur die prinzipielle Erreichbarkeit des Teilnehmers in dem anderen Kommunikationsnetz (PISN) in der dem Teilnehmer zugeordneten Datenbasis des Mobilfunknetzes (PLMN) gespeichert ist.

5. Verfahren nach einem der Ansprüche 1 bis 3, **dadurch gekennzeichnet, daß** die aktuelle Erreichbarkeit des Teilnehmers in dem anderen Kommunikationsnetz (PISN) in der dem Teilnehmer zugeordneten Datenbasis des Mobilfunknetzes (PLMN) gespeichert ist.

6. Verfahren nach Anspruch 5, **dadurch gekennzeichnet, daß** das andere Kommunikationsnetz (PISN) dem Mobilfunknetz (PLMN) die aktuelle Erreichbarkeit des Teilnehmers in dem anderen Kommunikationsnetz (PISN) in Form einer Meldung übermittelt.

7. Verfahren nach einem der Ansprüche 1 bis 4, **dadurch gekennzeichnet, daß** das Nachrichtenzentralmodul (NZM) des Mobilfunknetzes (PLMN) bei Vorliegen einer dem Teilnehmer zuzustellenden Textnachricht ein Prüfen der aktuellen Erreichbarkeit des Teilnehmers in dem anderen Kommunikationsnetz (PISN) veranlaßt.

8. Verfahren nach einem der vorhergehenden Ansprüche, **dadurch gekennzeichnet, daß** der Teilnehmer sowohl im Mobilfunknetz (PLMN) als auch im anderen Kommunikationsnetz (PISN) mit Hilfe eines zwischen Schnurlosbetrieb und Mobilfunkbetrieb umschaltbaren Endgerätes erreichbar ist und daß dieses Endgerät nach Erhalt einer Information über das Vorliegen einer Textnachricht in dem Nachrichtenzentralmodul (NZM) des Mobilfunknetzes (PLMN) automatisch in den Mobilfunkmodus umgeschaltet wird.

9. Verfahren nach einem der vorhergehenden Ansprüche, **dadurch gekennzeichnet, daß** das Nachrichtenzentralmodul (NZM) des Mobilfunknetzes (PLMN) nach dem Ausliefern einer Textnachricht eine Erledigungsmeldung an das Steuermodul (SM) des anderen Kommunikationsnetzes (PISN) übermittelt, falls zuvor eine Meldung über das Vorliegen einer Textnachricht für den Teilnehmer an dieses Steuermodul übermittelt worden ist.

## Claims

1. Method for delivering a text message which has been received in a central message module (NZM), provided for receiving and delivering text messages, of a public mobile radio network (PLMN), for delivery to a subscriber who is registered as. a subscriber both in the mobile radio network (PLMN) and in another communication network (PISN) and the location of them is stored in a database associated with him if he can be reached within the public mobile radio network (PLMN), in which method, when a text message to be delivered to the subscriber is present, a check is made in the mobile radio network (PLMN) whether the subscriber can be reached within the mobile radio network (PLMN), **characterized in that** the availability of the subscriber in the other communication network (PISN) is stored in the subscriber-associated database of the mobile radio network (PLMN), **in that** the central message module (NZM) transmits a message about the presence of a text message for the subscriber to a control module (SM) of the other communication network (PISN), and **in that** this control module (SM) thereupon initiates the display of an information item about the presence of a text message in the central message module (NZM) of the mobile radio network (PLMN) to a terminal (KE2) associated with the subscriber within the other communication network (PISN).

2. Method according to Claim 1, **characterized by** the transmission of a message about the presence of a text message for the subscriber to a control module (SM) of the other communication network (PISN) by the central message module (NZM) if the subscriber cannot be reached within the mobile radio network (PLMN).

3. Method according to Claim 1 or 2, **characterized in that** the availability of the subscriber in the other communication network (PISN) is checked and **in that** the central message module (NZM) transmits a message about the presence of a text message for the subscriber to a control module (SM) of the other communication network (PISN) if the availability of the subscriber in the other communication network (PISN) is detected by the central message module (NZM).

4. Method according to one of the preceding claims, **characterized in that** it is only the basic availability of the subscriber in the other communication network (PISN) which is stored in the subscriber-associated database of the mobile radio network (PLMN).

5. Method according to one of Claims 1 to 3, **characterized in that** the current availability of the subscriber in the other communication network (PISN) is stored in the subscriber-associated database of the mobile radio network (PLMN).

6. Method according to Claim 5, **characterized in that** the other communication network (PISN) transmits to the mobile radio network (PLMN) the current availability of the subscriber in the other communication network (PISN) in the form of a message.

7. Method according to one of Claims 1 to 4, **characterized in that** the central message module (NZM) of the mobile radio network (PLMN) initiates a check of the current availability of the subscriber in the other communication network (PISN) when a text message to be delivered to the subscriber is present.

8. Method according to one of the preceding claims, **characterized in that** the subscriber can be reached both in the mobile radio network (PLMN) and in the other communication network (PISN) with the aid of a terminal which can be switched between cordless operation and mobile radio operation and **in that** this terminal, after receiving information on the presence of a text message in the central message module (NZM) of the mobile radio network (PLMN), is automatically switched to the mobile radio mode.

9. Method according to one of the preceding claims, **characterized in that** the central message module (NZM) of the mobile radio network (PLMN), after having delivered a text message, transmits a completion message to the control module (SM) of the other communication network (PISN) if a message about the presence of a text message for the subscriber has previously been transmitted to this control module.

## Revendications

1. Procédé pour remettre un message textuel qui a été reçu dans un module central de communication (NZM) d'un réseau radiotéléphonique mobile public (FLMN) et destiné à recevoir et à remettre des messages textuels à remettre à un participant qui est enregistré dans le réseau radiotéléphonique mobile (PLMN) ainsi que dans un autre réseau de communication (PISN) en tant que participant et dont le lieu de séjour est mémorisé dans une base de données associée audit participant lorsqu'il est accessible à l'intérieur du réseau radiotéléphonique mobile (PLMN), et ledit procédé vérifie, au cas de la présence d'un message textuel dans ledit réseau radiotéléphonique mobile et devant être remis audit participant, si ledit participant est accessible à l'intérieur dudit réseau radiotéléphonique mobile (PLMN), **caractérisé en ce que** l'accessibilité dudit participant dans l'autre réseau de communication (PISN) est mémorisée dans la base de données associée audit participant dudit réseau radiotéléphonique mobile (PLMN), que ledit module central de communication (NZM) transmet une notification sur la présence d'un message textuel pour ledit participant à un module de commande (SM) de l'autre réseau de communication (PISN), et que ledit module de commande (SM) provoque alors l'affichage d'une information sur la présence d'un message textuel dans le module central de communication (NZM) dudit réseau radiotéléphonique mobile (PLMN) sur un terminal (KE2) associé au participant à l'intérieur de l'autre réseau de communication (PISN).

2. Procédé selon la revendication 1, **caractérisé par** le transfert d'une notification sur la présence d'un message textuel pour le participant à un module de commande (SM) de l'autre réseau de communication (PISN) par l'intermédiaire dudit module central de communication (NZM), lorsque ledit participant n'est pas accessible à l'intérieur dudit réseau radiotéléphonique mobile (PLMN).

3. Procédé selon la revendication 1 ou 2, **caractérisé en ce que** l'accessibilité du participant dans ledit autre réseau de communication (PISN) est vérifiée, et que ledit module central de communication (NZM) transmet une notification sur la présence d'un message textuel pour ledit participant à un module de commande (SM) dudit autre réseau de communication (PISN), lorsque l'accessibilité du participant dans ledit autre réseau de communication (PISN) a été reconnue par ledit module central de communication (NZM).

4. Procédé selon l'une quelconque des revendications précédentes, **caractérisé en ce que** seule l'accessibilité de principe du participant dans ledit autre réseau de communication (PISN) est mémorisée dans la base de données associée au participant dudit réseau radiotéléphonique mobile (PLMN).

5. Procédé selon l'une quelconque des revendications 1 à 3, **caractérisé en ce que** l'accessibilité actuelle du participant dans ledit autre réseau de communication (PISN) est mémorisée dans la base de données associée au participant dudit réseau radiotéléphonique mobile (PLMN).

6. Procédé selon la revendication 5, **caractérisé en ce que** ledit autre réseau de communication (PISN) transmet au réseau radiotéléphonique mobile (PLMN) l'accessibilité actuelle du participant dans ledit autre réseau de communication (PISN) sous la forme d'une notification.

7. Procédé selon l'une quelconque des revendications 1 à 4, **caractérisé en ce que** ledit module central de communication (NZM) du réseau radiotéléphonique mobile (PLMN) provoque une vérification de l'accessibilité actuelle du participant dans ledit autre réseau de communication (PISN), lorsqu'un message textuel devant être remis audit participant est présent.

8. Procédé selon l'une quelconque des revendications précédentes, **caractérisé en ce** le participant est accessible dans ledit réseau radiotéléphonique mobile (PLMN) ainsi que dans ledit autre réseau de communication (PISN) à l'aide d'un terminal susceptible d'être commuté entre un mode sans cordon et un mode radiotéléphonique, et que ledit terminal est automatiquement commuté en mode radiotéléphonique lorsqu'il reçoit une information sur la présence d'un message textuel dans le module central de communication (NZM) dudit réseau radiotéléphonique mobile (PLMN).

9. Procédé selon l'une quelconque des revendications précédentes, **caractérisé en ce que**, après l'emission d'un message textuel, le module central de communication (NZM) dudit réseau radiotéléphonique mobile (PLMN) transmet une notification de complétion au module de commande (SM) dudit autre réseau de communication (PISN), lorsqu'une notification sur la présence d'un message textuel pour ledit participant a été transmise audit modul de commande (SM) auparavant.
